(19) Europäisches Patentamt
European Patent Office
Office européen des brevets

(11) **EP 3 056 330 B1**

(12) **EUROPEAN PATENT SPECIFICATION**

(45) Date of publication and mention of the grant of the patent:
**13.11.2019 Bulletin 2019/46**

(51) Int Cl.:
***B29C 53/60*** *(2006.01)* ***B29C 69/00*** *(2006.01)*

(21) Application number: **15155227.0**

(22) Date of filing: **16.02.2015**

(54) **PANELS MADE FROM CYLINDRICAL HOLLOW ARTICLES**

AUS ZYLINDRISCHEN HOHLKÖRPERN HERGESTELLTE PLATTEN

PANNEAUX FABRIQUÉS À PARTIR D'ARTICLES CREUX CYLINDRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2016 Bulletin 2016/33**

(73) Proprietor: **Teijin Aramid B.V.**
**6824 BM Arnhem (NL)**

(72) Inventors:
• **VAN DE HEE, Hendrik**
**6716 JC Ede (NL)**

• **JANSEN, Martinus**
**6931 BR Westervoort (NL)**
• **JOURNÉE, Marinus**
**6924 BM Loo (NL)**

(74) Representative: **CPW GmbH**
**Kasinostraße 19-21**
**42103 Wuppertal (DE)**

(56) References cited:
**WO-A1-2004/113058    DE-A1- 2 460 808**
**US-A- 3 713 753    US-A- 4 568 582**

## Description

The invention pertains to a process for preparing singly curved panels from cylindrical hollow articles. In particular, the method comprises preparing a cylindrical hollow article made by winding at least one sheet of high-strength fibers around a cylindrical mandrel, subjecting the sheet positioned onto the mandrel to pressure and/or heat to form a consolidated cylindrical hollow article and cutting the cylindrical hollow article into singly curved panels.

Panels of high-strength fibers such as ultra-high molecular weight polyethylene, aramid, carbon and glass fibers, are useful in numerous applications, such as in forming structures of high strength including antiballistic articles, such as bullet-proof inserts.

Processes for producing panels of high-strength fibers are known in the art.

EP 833 742 describes a ballistic resistant moulded article containing a compressed stack of monolayers, with each monolayer containing unidirectionally oriented fibres and at most 30 wt.% of an organic matrix material.

WO 2006/107197 describes a method for manufacturing a laminate of polymeric tapes in which polymeric tapes of the core-cladding type are used, in which the core material has a higher melting temperature than the cladding material, the method comprising the steps of biassing the polymeric tapes, positioning the polymeric tapes, and consolidating the polymeric tapes to obtain a laminate.

EP 1 627 719 describes a ballistic resistant article consisting essentially of ultra-high molecular weight polyethylene which comprises a plurality of unidirectionally oriented polyethylene sheets cross-plied at an angle with respect to each other and attached to each other in the absence of any resin, bonding matrix, or the like.

EP 2 252 853 describes to a ballistic-resistant moulded article comprising a compressed stack of sheets comprising reinforcing elongate bodies and an organic matrix material, the direction of the elongate bodies within the compressed stack being not unidirectionally.

US 3,713,753 describes a laminate construction for an airfoil wing type member, such as a helicopter rotor blade, produced by machine winding multiple layers of reinforcing fiber about a foil-like material support layer on a rotatable mandrel.

DE 24 60 808 describes a method for obtaining lightweight building components from fibre-reinforced plastics comprising winding plastics-impregnated rovings onto a mandrel to form cross-wound layers, and removing the resulting laminate from the mandrel and hardening.

While the references mentioned above describe adequate processes for forming ballistic resistant moulded articles, there is still room for improvement. This is particularly so when aiming to obtain singly curved panels for which special molding equipment or additional steps are generally required.

The aim of the instant invention is to provide a simple method for obtaining singly curved panels, whereby a number of panels can be obtained simultaneously, which does not require individually stacking, cutting and compressing of sheets.

The aim is achieved by a process for obtaining singly curved articles according to claim 1. In particular, the process comprises:

a) winding at least one sheet of high-strength fibers around a cylindrical mandrel to create a cylindrical hollow article around the mandrel,
b) subjecting the cylindrical hollow article around the mandrel to heat and/or pressure to provide a consolidated cylindrical hollow article, and
c) cutting the consolidated cylindrical hollow article into at least one singly curved panel,

wherein the at least one sheet of high-strength fibers comprises at least two monolayers of unidirectionally oriented high-strength fibers, and wherein the main extension directions of the unidirectionally oriented high-strength fibers in adjacent layers is non-unidirectional.

The use of mandrels in processes for obtaining flat or slightly curved plates has been described in, for instance, DE 34 15 466. In particular, DE 34 15 466 describes forming a rolled structure, by rolling a fiber onto a mandrel, which can be cut to form armor materials. Flat or slightly curved plates are described to be obtained from cylindrical forms by first rolling the fiber onto a cylindrical mandrel, removing the fibrous cylinder from the mandrel and then flattening the cylinder in a press or cutting the cylinder to provide a flat surface which is then pressed under heat and temperature. This document does not disclose the use of sheets instead of fibers to form the rolled structure or directly pressing and/or heating the fibers on the mandrel as in the instant invention.

The winding of sheets onto a cylindrical mandrel as described herein, facilitates and speeds up the winding process, which in turn advantageously predetermines the distribution of the high-strength fibers within the intermediate cylindrical hollow article. Further, subjecting the cylindrical hollow article to heat and/or pressure directly on the mandrel also facilitates the process by already fixing the curvature of the singly curved panel prior to cutting, allowing the shaping of several panels simultaneously, without having to compress each panel individually.

These and other advantages of the instant invention will become apparent from the description of the invention detailed herein below.

Step a) of a process described herein comprises winding at least one sheet of high-strength fibers around a cylindrical mandrel to create a cylindrical hollow article around the mandrel.

In the context of the instant invention a fiber is an elongated body the length dimension of which is much greater than its width and its thickness. A fiber may be, e.g., a tape, a monofilament, a multifilament yarn or a thread. The fiber may preferably be a tape.

High-strength fibers are fibers of a high-strength material. It is preferred that the high-strength fibers are suitable for ballistic applications. Suitable high-strength materials include, for example, polymeric materials (such as polyolefin, aramid and polyester), carbon, and glass. The use of high-strength fibers of more than one high-strength material is also envisaged. The high-strength material may be preferably selected from at least one of polyethylene, aramid and carbon. High-strength fibers more preferably comprise, or even consist of, ultra-high molecular weight polyethylene (UHMWPE).

In several embodiments the high-strength fibers comprise UHMWPE tapes, in particular non-fibrous monolithic UHMWPE tapes.

UHMWPE used in the instant invention can be a homopolymer of ethylene or a copolymer of ethylene with a co-monomer which is another alpha-olefin or a cyclic olefin both with generally between 3 and 20 carbon atoms. Examples include propene, 1-butene, 1-pentene, 1-hexene, 1-heptene, 1-octene, cyclohexene, etc. The use of dienes with up to 20 carbon atoms is also possible, e.g., butadiene or 1-4 hexadiene. The amount of (non-ethylene) alpha-olefin in the ethylene homopolymer or copolymer used in the process according to the invention preferably is at most 10 mol%, preferably at most 5 mol%, more preferably at most 1 mol%. If a (non-ethylene) alpha-olefin is used, it is generally present in an amount of at least 0.001 mol%, in particular at least 0.01 mol%, still more in particular at least 0.1 mol%.

UHMWPE used in the instant invention generally has a weight average molecular weight of at least 500 000 gram/mol, in particular between $1.10^6$ gram/mol and $1.10^8$ gram/mol. The weight average molecular weight is determined in accordance with ASTM D 6474-99 at a temperature of 160°C using 1,2,4-trichlorobenzene (TCB) as solvent. Appropriate chromatographic equipment (PL-GPC220 from Polymer Laboratories) including a high temperature sample preparation device (PL-SP260) may be used. For determination of the average molecular weight greater than two million g/mol rheological methods described in Talebi et al (Macromolecules 2010, 43, 2780-2788; DOI: 10.1021/ma902297b) can also be used. In this method oscillatory shear measurements and stress relaxation in the linear viscoelastic (LVE) regime are performed using a Rheometrics RMS 800 strain controlled spectrometer over a broad range of temperatures (140-220 °C), angular frequencies (0.001 to 100 rad/s) and strains (0.5 to 2%). By performing strain sweeps the LVE region is established. Due to high sample stiffness, parallel plate geometry is used with a disk diameter of 8 mm. Sample thickness is 1 mm. For the high molar mass materials, stress relaxation experiments are performed to expand the time window of the measurements. Prior to the measurements, the polymer powders are first compressed at 50 °C and 200 bars and the thus obtained disks of 8 mm diameter from the sintered powder are heated fast (~ 30 ℃/min) to well above the equilibrium melting temperature in the rheometer. Stress relaxation and frequency sweep experiments are performed by applying strain amplitude in the LVE regime.

The UHMWPE fibers, and in particular the UHMWPE tapes, used in the instant invention are preferably obtainable from a highly disentangled UHMWPE.

The UHMWPE used for obtaining high-strength fibers and in particular tapes, may preferably have an elastic shear modulus $G_N^0$ determined directly after melting at 160℃ of at most 1.4 MPa, more in particular at most 1.0 MPa, still more in particular at most 0.9 MPa, even more in particular at most 0.8 MPa, and even more in particular at most 0.7 MPa. The wording "directly after melting" means that the elastic shear modulus is determined as soon as the polymer has melted, in particular within 15 seconds after the polymer has melted. For this polymer melt $G_N^0$ typically increases from 0.6 to 2.0 MPa in one, two, or more hours, depending on the molar mass. The elastic shear modulus directly after melting at 160℃ is one of the characterising features of the very disentangled UHMWPE used in the present invention. $G_N^0$ is the elastic shear modulus in the rubbery plateau region. It is related to the average molecular weight between entanglements Me, which in turn is inversely proportional to the entanglement density. In a thermodynamically stable melt having a homogeneous distribution of entanglements, Me can be calculated from $G_N^0$ via the formula

$$G_N^0 = g_N \rho R T / M_e \;,$$

where $g_N$ is a numerical factor set at 1, rho is the density in g/cm³, R is the gas constant and T is the absolute temperature in K.

A low elastic shear modulus thus stands for long stretches of polymer between entanglements, and thus for a low degree of entanglement. The adopted method for the investigation on changes in $G_N^0$ with the entanglements formation is the same as described in publications (Rastogi, S., Lippits, D., Peters, G., Graf, R., Yefeng, Y. and Spiess, H., "Heterogeneity in Polymer Melts from Melting of Polymer Crystals", Nature Materials, 4(8), 1st August 2005, 635-641 and PhD thesis Lippits, D.R., "Controlling the melting kinetics of polymers; a route to a new melt state", Eindhoven University of Technology, dated 6th March 2007, ISBN 978-90-386-0895-2).

The UHMWPE used preferably has a DSC crystallinity of at least 74%, more in particular at least 80%. The morphology of the films may be characterised using differential scanning calorimetry (DSC), for example on a Perkin Elmer DSC7. Thus, a sample of known weight (2 mg) is heated from 30 to 180°C at 10°C per minute, held at 180°C for 5 minutes, then cooled at 10°C per minute. The results of the DSC scan may be plotted as a graph of heat flow (mW or mJ/s; y-axis) against temperature (x-axis). The crystallinity is measured using the data from the heating portion of the scan. An enthalpy of fusion $\Delta H$ (in J/g) for the crystalline melt transition is calculated by determining the area under the graph from the temperature determined just below the start of the main melt transition (endotherm) to the temperature just above the point where fusion is observed to be completed. The calculated $\Delta H$ is then compared to the theoretical enthalpy of fusion ($\Delta H_c$ of 293 J/g) determined for 100% crystalline PE at a melt temperature of approximately 140°C. A DSC crystallinity index is expressed as the percentage $100(\Delta H/\Delta H_c)$.

UHMWPE fibers (and in particular tapes) used in the instant invention and the intermediate and final products of the manufacturing process according to the invention preferably also have crystallinities as indicated above.

The UHMWPE used to obtain high-strength fibers for the present invention (in particular tapes) may have a bulk density which is significantly lower than the bulk density of conventional UWMWPEs. More in particular, the UHMWPE used in the process according to the invention may have a bulk density below 0.25 g/cm³, in particular below 0.18 g/cm³, still more in particular below 0.13 g/cm³. The bulk density may be determined in accordance with ASTM-D1895. A fair approximation of this value can be obtained as follows. A sample of UHMWPE powder is poured into a measuring beaker of exact 100 ml. After scraping away the surplus of material, the weight of the content of the beaker is determined and the bulk density is calculated.

The starting UHMWPE polymer for obtaining UHMWPE high-strength fibers (in particular tapes) used in the present invention may be manufactured by a polymerisation process wherein ethylene, optionally in the presence of other monomers as discussed above, is polymerised in the presence of a single-site polymerisation catalyst at a temperature below the crystallisation temperature of the polymer, so that the polymer crystallises immediately upon formation. In particular, reaction conditions are selected such that the polymerisation speed is lower than the crystallisation speed. These synthesis conditions force the molecular chains to crystallize immediately upon their formation, leading to a rather unique morphology which differs substantially from the one obtained from the solution or the melt. The crystalline morphology created at the surface of a catalyst will highly depend on the ratio between the crystallization rate and the growth rate of the polymer. Moreover, the temperature of the synthesis, which is in this particular case also crystallization temperature, will strongly influence the morphology of the obtained UHMW-PE powder. In one embodiment the reaction temperature is between -50 and +50ºC, more in particular between -15 and +30ºC. It is well within the scope of the skilled person to determine via routine trial and error which reaction temperature is appropriate in combination with which type of catalyst, polymer concentrations and other parameters influencing the reaction. To obtain a highly disentangled UHMWPE it is important that the polymerisation sites are sufficiently far removed from each other to prevent entangling of the polymer chains during synthesis. This can be done using a single-site catalyst which is dispersed homogenously through the crystallisation medium in low concentrations. More in particular, concentrations less than $1.10^{-4}$ mol catalyst per liter, in particular less than $1.10^{-5}$ mol catalyst per liter reaction medium may be appropriate. Supported single site catalyst may also be used, as long as care is taken that the active sites are sufficiently far removed from each other to prevent substantial entanglement of the polymers during formation. Suitable methods for manufacturing starting UHMWPE used in the present invention are known in the art. Reference is made, for example to WO01/21668 and US20060142521.

Preferably, high-strength fibers as described herein, in particular tapes and more in particular UHMWPE tapes, have tensile strengths of at least 1.5 GPa, or at least 1.7 GPa, as determined in accordance with ASTM D882-00. Generally, the tensile strength may depend on the method of preparation of the high-strength fibers and in particular on the stretching ratio and stretching temperature to which they are subjected. In some embodiments, high-strength fibers may be used with a tensile strength of at least 2.0 GPa. Sometimes a tensile strength of at least 2.5 GPa may be obtained, in particular at least 3.0 GPa, more in particular at least 3.5 GPa. Tensile strengths of at least 4 GPa may also be obtained.

Preferably the high-strength fibers, in particular (UHMWPE) tapes, have a high tensile energy to break. The tensile energy to break is determined in accordance with ASTM D882-00 using a strain rate of 50%/min. It is calculated by integrating the energy per unit mass under the stress-strain curve. Depending on the stretching ratio, high-strength fibers, and in particular (UHMWPE) tapes, may be obtained which have a tensile energy to break of at least 15 J/g, or a tensile energy to break of at least 25 J/g. In some embodiments a material may be obtained with a tensile energy to break of at least 30 J/g, in particular at least 40 J/g GPa, more in particular at least 50 J/g GPa.

The modulus of high-strength fibers as described herein, and in particular of the (UHMWPE) tapes, may generally be of at least 100 GPa. The modulus is determined in accordance with ASTM D822-00. It is possible to use high-strength fibers, and in particular (UHMWPE) tapes, with moduli of at least 140 GPa, or at least 150 GPa for the tapes.

UHMWPE tapes that may be used in the present invention may generally have a 200/110 uniplanar orientation parameter $\phi$ of at least 3, in particular of at least 6. The 200/110 uniplanar orientation parameter $\phi$ is defined as the ratio between the 200 and the 110 peak areas in the X-ray diffraction (XRD) pattern of the tape sample as determined in reflection geometry. Wide angle X-ray scattering (WAXS) is a technique that provides information on the crystalline structure of matter. The technique specifically refers to the analysis of Bragg peaks scattered at wide angles. Bragg peaks result from long-range structural order. A WAXS measurement produces a diffraction pattern, i.e. intensity as function of the diffraction angle $2\theta$ (this is the angle between the diffracted beam and the primary beam).

The 200/110 uniplanar orientation parameter gives information about the extent of orientation of the 200 and 110 crystal planes with respect to the tape surface. For a tape sample with a high 200/110 uniplanar orientation the 200 crystal planes are highly oriented parallel to the tape surface. The ratio between the 200 and 110 peak areas for a specimen with randomly oriented crystallites is around 0.4.

The value for the 200/110 uniplanar orientation parameter may be determined using an X-ray diffractometer. A Bruker-AXS D8 diffractometer equipped with focusing multilayer X-ray optics (Göbel mirror) producing Cu-K$\alpha$ radiation (K wavelength = 1.5418 A) is suitable. Measuring conditions: 2 mm anti-scatter slit, 0.2 mm detector slit and generator setting 40kV, 35mA. The tape specimen is mounted on a sample holder, e.g. with some double-sided mounting tape. The preferred dimensions of the tape sample are 15 mm x 15 mm (l x w). Care should be taken that the sample is kept perfectly flat and aligned to the sample holder. The sample holder with the tape specimen is subsequently placed into the D8 diffractometer in reflection geometry (with the normal of the tape perpendicular to the goniometer and perpendicular to the sample holder). The scan range for the diffraction pattern is from 5° to 40° ($2\theta$) with a step size of 0.02° ($2\theta$) and a counting time of 2 seconds per step. During the measurement the sample holder spins with 15 revolutions per minute around the normal of the tape, so that no further sample alignment is necessary. Subsequently the intensity is measured as function of the diffraction angle $2\theta$. The peak area of the 200 and 110 reflections is determined using standard profile fitting software, e.g. Topas from Bruker-AXS. As the 200 and 110 reflections are single peaks, the fitting process is straightforward and it is within the scope of the skilled person to select and carry out an appropriate fitting procedure. The 200/110 uniplanar orientation parameter is defined as the ratio between the 200 and 110 peak areas. This parameter is a quantitative measure of the 200/110 uniplanar orientation.

The 200/110 uniplanar orientation is perpendicular to the width of the tapes and thus parallel to the main extension direction of the tapes.

In several embodiments, the high-strength fibers may be tapes, in particular UHMWPE tapes, having a width of at least 2 mm and a thickness of at most 0.5 mm. In particular, the width may be of at least 5 mm, at least 10 mm, at least 20 mm, at least 40 mm, and more in particular of at least 50 mm, and of at most 250 mm, in particular of at most 200 mm, and even more in particular of at most 150 mm. The thickness may particularly be of at most 0.25 mm, at most 0.1 mm, at most 0.06 mm, or even at most 0.04 mm and of at least 0.01 mm, in particular at least 0.02 mm, and more in particular of at least 0.03 mm. The use of thin tapes contributes to the flexibility of the sheets obtained therefrom, facilitating their winding process.

High-strength fibers may be obtained by methods known in the art. In particular, UHMWPE tapes as described herein may be obtained by solid state methods, i.e. wherein the polymer is processed in absence of any solvents and below its melting temperature under the processing conditions. In particular, UHMWPE tapes may be preferably obtained by subjecting a starting ultra-high molecular weight polyolefin in powder form to a compacting step and subjecting the compacted polyolefin to a rolling step and at least one stretching step under such conditions that at no point during the processing of the polymer its temperature is raised to a value above its melting point. Under such conditions non-fibrous monolithic tapes are typically obtained.

In several embodiments, UHMWPE tapes may be preferably produced according to the process described in EP2307180, wherein compacting is performed by using an isobaric press.

In step a) the at least one sheet of high-strength fibers, which is wound around the cylindrical mandrel, comprises at least two layers of unidirectionally oriented high-strength fibers, the main extension directions of the unidirectionally oriented high-strength fibers in adjacent layers being non-unidirectional.

Unidirectionally oriented means that the high-strength fibers are oriented parallel to each other within a layer, in other words the high-strength fibers share the same main extension direction. The unidirectionally oriented high-strength fibers forming a layer may overlap or may not overlap. In particular, when the high-strength fibers are (UHMWPE) tapes, it may be preferred for the high-strength fibers not to overlap.

A sheet as described herein comprises at least two layers of unidirectionally oriented high-strength fibers, in particular at least 4 layers. Generally, the number of layers may be of at most 12, in particular at most 8. Preferably a sheet used in the instant invention has 2 or 4 layers of unidirectionally oriented high-strength fibers. This number of layers ensures that the final panel has the desired properties whilst allowing enough flexibility for the sheet to be wound around the mandrel for the preparation of the intermediate cylindrical hollow article.

In the sheets used in the method as described herein, the main extension directions of the unidirectionally oriented high-strength fibers in adjacent layers are non-unidirectional, i.e. the sheets have a cross-ply arrangement.

In particular, the main extension directions of the unidirectionally oriented high-strength fibers in adjacent layers may define an angle of 20° to 160°, 45° to 135°, preferably an angle of 60° to 120°, more preferably an angle of 80° to 110°, and most preferably an angle of substantially 90°. This arrangement of overlapping monolayers ensures that the final panel has the desired properties whilst allowing for the sheet to be wound around the mandrel for the preparation of the intermediate cylindrical hollow article. In several embodiments the sheet may comprise a layer having unidirectionally oriented high-strength fibers with the main extension direction at 0° and an adjacent layer having unidirectionally oriented high-strength fibers with the main extension direction at 90°, defining an angle of 90° between layers. Such construction is also referred to herein as a 0-90 construction.

Sheets having cross-ply arrangements, in addition to having adjacent layers defining an angle as described above, may also have adjacent layers which define and angle of 0°, i.e. the main extension directions of the unidirectionally oriented high-strength fibers in adjacent layers being the same. For instance, in several embodiments a sheet may comprise two first layers having unidirectionally oriented high-strength fibers with the main extension direction at 0° and two second layers having unidirectionally oriented high-strength fibers with the main extension direction at 90°, the angle defined by the two first layers and the angle defined by the two second layers being each of 0°, whereas the angle defined between the first layers and the second layers being of 90°. Such a construction is also referred to herein as a 0-0-90-90 construction.

Other possible arrangements of layers of unidirectionally oriented high-strength fibers in the sheet include for instance a 0-90-90-0 arrangements.

In several embodiments and in particular when the high-strength fibers are tapes and more in particular UHMWPE tapes, layers in the sheets as described herein may also have a brick-layer arrangement. In a brick layer arrangement the fiber main extension direction of adjacent layers is the same, i.e. define an angle of 0°, and the tapes of each layer are offset to the tapes of adjoining layers above or below that layer, whereby the tapes in layer are oriented in a unidirectional way (this means parallel side-by-side). Preferably the tapes have no interspace between each other in one layer. If there is a interspace - the tapes are arranged in spaced-apart, parallel side-by-side relationship in a first layer, the interspace between the tapes in the first layer is preferably smaller than the width of the tapes, after which tapes are arranged in spaced-apart, parallel side-by-side relationship in a second layer, in which position the interspace in the first layer are covered up by the tapes in the second layer. Useful cross-ply and bricklayer arrangements are disclosed in, e.g., WO 2006/107197 and WO 2008/040506.

In several particular embodiments, the sheet may have a 0-0-90-90 construction as defined above, wherein the two first layers and the two second layers may preferably have a brick layer arrangement.

A sheet described herein may preferably have 2 or 4 layers of unidirectionally oriented high-strength fibers (preferably tapes and most preferably UHMWPE tapes) in a 0-90 arrangement or in a 0-0-90-90 arrangement respectively, wherein layers with unidirectionally oriented high-strength fibers of the same main extension direction preferably have a brick layer arrangement.

A sheet of high-strength fibers as defined herein may comprise a thermoplastic and/or thermoplastic elastomer. The thermoplastic and/or thermoplastic elastomer may be present on and/or between the high-strength fibers in the sheet.

In several embodiments, the sheet maybe covered by the thermoplastic and/or thermoplastic elastomer, whereby one or both surfaces of the sheet maybe covered by the thermoplastic and/or thermoplastic elastomer.

In several embodiments, the thermoplastic and/or thermoplastic elastomer may be arranged between layers of unidirectionally oriented high-strength fibers within the sheet.

In several preferred embodiments, the thermoplastic and/or thermoplastic elastomer is present between layers and on at least one of the surfaces of the sheet.

The thermoplastic and/or thermoplastic elastomer can cover the sheet entirely or partially. The thermoplastic and/or thermoplastic elastomer may be applied in solid form or in liquid form, e.g. by spraying or roll-coating a solution or dispersion of the thermoplastic and/or thermoplastic elastomer onto the sheet or onto the layers of the sheet, or by applying thereto a preformed film of the thermoplastic and/or thermoplastic elastomer.

In a preferred embodiment the high-strength fibers or the sheet(s) made of high-strength fibers are covered entirely by the thermoplastic and/or thermoplastic elastomer (this means more than 80 % of the fiber surface or sheet surface is covered by the thermoplastic and/or thermoplastic elastomer).

Preferably, the sheet and the high-strength fibers within the sheet are not impregnated with thermoplastic and/or thermoplastic elastomer. The difference between coating or covering and impregnating is that in the coating or covering process only the surface of the layer of high-strength fibers or of the sheet is coated with this material. In an impregnating step the coating material is on the surface and also within the layers of unidirectionally oriented high-strength fibers, i.e. between the high-strength fibers and surrounding all the high-strength fibers.

The thermoplastic and/or thermoplastic elastomer preferably have a melting point below the melting point of the high-strength fibers.

Suitable thermoplastics and/or thermoplastic elastomers may be selected from, for instance, at least one of: polyurethanes; polyvinyls; polyacrylates; polyolefins, such as low density polyethylene (LDPE) and high density polyethylene (HDPE); and block copolymers, such as SIS (styrene-isoprene-styrene), SBS (styrenebutadiene-styrene), SEBS (styrene-ethylene-butylene-polystyrene). Polyolefins and block copolymers are preferably chosen as matrix material.

In several embodiments the sheet may comprise from 0.5 to 40 wt.% of a thermoplastic and/or thermoplastic elastomer, based on the total weight of the sheet, in particular from 1 to 30 wt.%, more in particular from 2 to 15 wt.%. Lower amounts of thermoplastic and/or thermoplastic elastomer, e.g. from 0.5 to 10 wt.%, in particular from 1 to 8 wt.%, more in particular from 2 to 6% and most in particular about 4 wt.%, may be obtained when the thermoplastic and/or thermoplastic elastomer is applied in the form of a solution or a dispersion, e.g. by roll-coating or spraying. Higher amounts of thermoplastic and/or thermoplastic elastomer, e.g. from 2 to 40 wt.%, in particular from 5 to 30 wt.% and more in particular from 10 to 20 wt.% may be obtained when, for instance, the thermoplastic and/or thermoplastic elastomer is applied in solid form (e.g. in the form of low density polyethylene or high density polyethylene films).

A sheet as described herein may be prepared by lamination or tension lamination. Such processes have been described in for instance WO 2006/107197, WO 2008/040506, and WO 2008/040511, wherein the high-strength fibers are unidirectionally aligned into layers and placed into the desired configuration, optionally together with a thermoplastic and/or a thermoplastic elastomer, under heat and under pressure or tension.

Generally, the heat and/or pressure conditions are sufficient to keep the layers of the sheet together (in the presence or absence of the thermoplastic and/or thermoplastic elastomer) whilst maintaining the flexibility of the sheet for winding around the cylindrical mandrel. For instance, heat and/or pressure conditions include a temperature of 100-150 °C, in particular of 120-140°C and more in particular of about 135°C and a pressure of 10-100 bar, in particular of 15-80 bar, more in particular of 20-50 bar, and yet more in particular of about 35 bar.

Step a) of a process as described herein comprises winding at least one sheet around a cylindrical mandrel to create a cylindrical hollow article around the mandrel.

A cylindrical mandrel is an inner mould of substantially cylindrical shape, with a circular or elliptical cross-section. The curvature of the cylindrical mandrel may be chosen depending on the desired shape of the singly curved panel to be ultimately obtained. For instance, in a cylindrical mandrel with a circular cross-section, the degree of curvature of the final panel will decrease with the diameter of the mandrel. Also the dimensions of the mandrel will determine the number of singly curved panels that may be obtained from the cylindrical hollow article.

A skilled person is able to determine the shape and dimensions of the mandrel depending on the targeted singly curved panels and the number thereof. As a mode of example the mandrel, preferably with a circular cross-section, may have a diameter from 500 mm to 3000 mm, in particular from 600 mm to 2000 mm and more in particular from 700 mm to 1400 mm. The length of mandrel may generally be equal to or greater than the diameter of the mandrel. For instance, the length of the mandrel may be from 500 mm to 5000 mm, from 750 to 3000 mm, from 1000 to 2000 mm.

As explained in detail below, to facilitate the subsequent consolidation of step b) the mandrel is preferably inflatable and heatable.

The cylindrical hollow article obtained may generally be an open cylinder, i.e. a cylinder without the top or bottom surfaces, preferably having two openings substantially perpendicular to the main extension direction of the cylinder. Such open cylinder may be regarded as a drum or a pipe-like article.

The at least one sheet may be wound around the cylindrical mandrel in any suitable manner. The sheet may be wound in such a way that the main extension direction of at least half of the high-strength fibers in the cylindrical hollow article is at an angle of 0 to 135° with regard to the main extension direction of the cylindrical hollow article, in particular of 20 to 100° and more in particular of 45 to 90°. In several embodiments at least half of the high-strength fibers in the cylindrical hollow article may be at an angle of 0° or 90° with regard to the main extension direction of the cylindrical hollow article. In several particular embodiments, half of the high-strength fibers in the cylindrical hollow article may be at an angle of 0° with regard to the main extension direction of the cylindrical article and half of the high-strength fibers in the cylindrical article may be at an angle of 90° with regard to the main extension direction of the cylindrical article. It may be preferred for the width of the sheet to coincide with the length of the mandrel. This advantageously enables for the sheet to be wound around covering all the length of the mandrel with a single sheet, without having to cut any excess material and simplifying the disposition of the high-strength fibers of the sheet within the cylindrical hollow article and ultimately within the singly curved panels.

Preferably, a single sheet may be used for creating the cylindrical hollow article. For instance, a single sheet may be wound around the mandrel several times until a cylindrical hollow article of the desired thickness is obtained. Alternatively several sheets may be used to obtain the cylindrical hollow article.

The thickness of the cylindrical hollow article may be constructed depending on the desired properties of the singly curved article ultimately obtained, and the properties of the sheets used. For instance, for ballistic applications it may be desired to obtain a singly curved articles with an areal density of 5-25 kg/m$^2$, in particular from 10-20 kg/m$^2$. In particular, when using sheets of UHMWPE tapes as described herein it may be desired to obtain singly curved articles of about 15 kg/m$^2$. It is in within the scope of the skilled person to determine the appropriate thickness of the cylindrical hollow article depending on the sheets used and the properties (e.g. areal density) of the ultimately obtained singly curved articles. To obtain a targeted thickness, a single sheet may be wound around the mandrel, on top of itself to generate a cylindrical hollow article with a thickness which will be a multiple of the sheet thickness. Generally, the thickness may be of at least 10 sheets, in particular at least 25 sheets, and more in particular at least 50 sheets, and of at most 125 sheets, in particular at most 100 sheets, and most in particular of at most 80 sheets.

When sheets are used which comprise a thermoplastic and/or thermoplastic elastomer on top and/or on the bottom surfaces of the sheets, in the resulting cylindrical hollow article the thermoplastic and/or thermoplastic elastomer will be present in between sheets, as well as on inner and/or outer surfaces of the cylindrical hollow article.

Step b) of a process as described herein comprises subjecting the cylindrical hollow article around the mandrel to heat and/or pressure to provide a consolidated cylindrical hollow article. In this step the cylindrical hollow article has not yet been removed from the mandrel when being subjected to heat and/or pressure.

Generally, the temperature to which the cylindrical hollow article around the mandrel is subjected is of at most 150°C, preferably of at most 135 °C. Temperatures higher than 150°C may compromise the properties, the structure or even integrity of the high-strength fibers. For instance, UHMWPE tapes at temperatures higher than 150°C may lose their crystalline structure and at the same time may lose their high tensile strength and modulus. Thus, also the properties of the finished curved panel may be detrimentally affected.

The temperature may be selected to be higher than the melting point of the thermoplastic and/or thermoplastic elastomer. For instance the temperature may be of at least 50°C, in particular of at least 80°C and most in particular of at least 100°C. By choosing such temperatures the molten thermoplastic and/or thermoplastic elastomer may contribute to binding the different sheets together. Thus, in addition to providing stability to the sheets during winding the presence of the thermoplastic and/or thermoplastic elastomer may also contribute to the consolidation of the cylindrical hollow article.

Generally, the pressure to which the cylindrical hollow article around the mandrel is subjected is of at most 250 bar, in particular from 5 bar to 200 bar, more in particular from 10 bar to 190 bar, yet more in particular from 25 bar to 180 bar, and most in particular from 50 bar to 175 bar,. Such pressures may suitably consolidate the cylindrical hollow article even when applied at low temperatures (e.g. below 50°C) or in the absence of a thermoplastic and/or thermoplastic elastomer. However, it is generally preferred to apply pressure at high temperatures (e.g. of at least 50 °C of at most 150 °C) and in combination with the presence of a thermoplastic and/or thermoplastic elastomer.

Furthermore, such pressures may advantageously improve the ballistic properties of the singly curved panels ultimately obtained.

Heat and/or pressure may be applied to the cylindrical hollow article for consolidation from the inside, from the outside or both from the inside and the outside.

Pressure can be applied by a gas, by a fluid or by pressing solid bodies against the material.

The cylindrical hollow article may be held together around the mandrel with a number of strips or tiewraps (e.g. aluminum strips) prior to subjecting it to heat and/or pressure.

In several embodiments, heat and/or pressure are applied to the cylindrical hollow article from inside of the mandrel, e.g. by heating and/or inflating the mandrel against the cylindrical hollow article. In several particular embodiments, the mandrel may be heated and/or inflated against the cylindrical hollow article held together strips or in the presence of a surrounding mandrel.

In several embodiments, the cylindrical hollow article around the mandrel may be subjected to a heat and/or pressure by compressing the cylindrical hollow article by means of a surrounding mould.

For instance, the surrounding mould may be heated (e.g. to a temperature of at most 150°C) and the mandrel may be inflated as to compress the cylindrical hollow article against the mould. Alternatively, the (heated) mould may compress the cylindrical hollow article against the mandrel.

In several embodiments, the cylindrical hollow article around the mandrel is subjected to a heat and/or pressure by means of a vacuum oven. For instance, the cylindrical hollow article around the mandrel and a surrounding mould or the cylindrical hollow article held together around mandrel with strips may be introduced into the vacuum oven, which may be at an elevated temperature (e.g. of at most 150°C) and the action of the vacuum may inflate the mandrel, thereby compressing the cylindrical hollow article against the surrounding mold.

After applying heat and/or pressure, the cylindrical hollow article is generally cooled prior to being removed from the mandrel and cut into singly curved panels. Cooling may be performed under pressure or after the pressure is released, it may be generally preferred for the cooling to be performed under pressure.

Step c) of a process described herein comprises cutting the consolidated cylindrical hollow article into at least one singly curved panel.

Cutting may be performed by methods known in the art. For instance cutting may be performed by means of a rotating knife (which may be heated), laser cutting or water jet cutting.

Cutting may be performed to obtain a singly curved panel with any desired shape. For instance, when the singly curved panels are to be used as inserts for bullet proof bests, the dimensions of the panel may preferably comply with those of stablished standards. In several particular embodiments, the singly curved panels may comply with the NIJ III standard for insert panels for bullet proof best (i.e. 254 mm wide and 305 mm long).

By using the method of the instant invention the curvature of the consolidated cylindrical hollow article is defined as well as the orientation of the high-strength fibers with respect to the curvature of the hollow article. Consequently, the curvature of the final panel and the orientation of the high-strength fibers with respect there to is also advantageously defined, thereby simplifying the preparation of the singly curved articles.

Further, the instant method provides a simple method for obtaining a significant number of singly curved panels simultaneously, which does not require individually stacking, cutting and compressing of sheets.

Singly curved panels obtainable by a method as described herein may be used in numerous applications, e.g. for antiballistic articles or for forming structures of high strength. For instance, the panels may be directly used as inserts of bullet proof vests.

The method of the instant invention may be executed as follows.

A commercially available sheet of high-strength fibers may be rolled around a cylindrical mandrel of circular cross-section having, e.g., a diameter of 800 mm and a length of 1600 mm.

The sheet may be, e.g., a Endumax® Shield XF 23 which is a sheet having a 0-0-90-90 structure of layers of UHMWPE tapes (of a tensile strength of approximately 2 GPa, a thickness of 55-58 $\mu$m and a width of 133 mm), the sheet having a width of 1600 mm and provided in, e.g., a roll of about 150 m length.

The sheet may be rolled around the mandrel in such a way that the width of the sheet covers the length of the mandrel. The sheet is rolled around the mandrel and on itself to obtain a cylindrical hollow article with a wall of an areal density of about 15 kg/m$^2$.

The mandrel and the cylindrical hollow article may be subjected to heat and pressure by means of, e.g., an external mould as described above, the temperature being of at most 150 °C and the pressure of about 55 bar. The cylindrical hollow article can be cooled to room temperature under pressure and removed from the mandrel to provide a consolidated cylindrical hollow article. The consolidated cylindrical hollow article can be cut into 45 singly curved panels 277 mm wide and 320 mm long which may be subsequently shaped according to NIJ III standards to provide an insert for a bullet proof vest 254 mm wide and 305 mm long.

This illustrates how with the method of the invention a substantial number of singly curved articles can be efficiently and simply obtained.

## Claims

1. Process for making a singly curved panel, comprising:

   a) winding at least one sheet of high-strength fibers around a cylindrical mandrel to create a cylindrical hollow article around the mandrel,
   b) subjecting the cylindrical hollow article around the mandrel to heat and/or pressure to provide a consolidated cylindrical hollow article, and

   c) cutting the consolidated cylindrical hollow article into at least one singly curved panel,

   wherein the at least one sheet of high-strength fibers comprises at least two layers of unidirectionally oriented high-strength fibers and wherein the main extension directions of the unidirectionally oriented high-stength fibers in adjacent layers is non-unidirectional.

2. Process according claim 1, wherein the unidirectionally oriented high-strength fibers comprise ultra-high molecular weight polyethylene (UHMWPE) tapes.

3. Process according to claim 2, wherein the UHMWPE tapes have a tensile strength of greater than 1.5 GPa according to ASTM D882-00 and a modulus of greater than 100 GPa according to ASTM D822-00 and a 200/110 uniplanar orientation parameter of at least 3, and preferably the 200/110 uniplanar orientation of the tapes is parallel to the main extension direction of the tapes.

4. Process according to claim 2 or claim 3, wherein the UHMWPE tapes are obtained from an UHMWPE having elastic shear modulus $G_N^0$ determined directly after melting at 160ºC of at most 1.4 MPa, in particular at most 1.0 MPa, more in particular at most 0.9 MPa, yet more in particular at most 0.8 MPa, and even more in particular of at most 0.7 MPa.

5. Process according to any one of claims 1-4, wherein the UHMWPE tapes have a width of at least 2 mm and a thickness of at most 0.5 mm.

6. Process according to any one of claims 1-5, wherein the at least one sheet of high-strength fibers comprises a thermoplastic and/or thermoplastic elastomer, in particular comprises from 0.5 to 40 wt.% of a thermoplastic and/or thermoplastic elastomer, based on the total weight of the sheet.

7. Process according to claim 6, wherein the thermoplastic and/or thermoplastic elastomer, is present between the at least two layers of unidirectionally oriented high-strength fibers, preferably also on at least one of the surfaces of the sheet.

8. Process according to any one of claims 1-7, wherein the main extension directions of the unidirectionally oriented high-strength fibers in adjacent layers define an angle of 20° to 160°, in particular of 45° to 135°, more in particular of 60° to 120°, even more in particular of 80° to 110°, and most in particular of substantially 90°.

9. Process according to any one of claims 1-8, wherein the sheet of high-strength fibers has 2 layers of unidirectionally oriented high-strength fibers in a 0-90 arrangement

10. Process according to any one of claims 1-8, wherein the sheet of high-strength fibers has 4 layers of unidirectionally oriented high-strength fibers in a 0-0-90-90 arrangement.

11. Process according to any one of claims 1-10, wherein the sheets are wound around the cylindrical mandrel in such a way that the main extension direction of at least half of the high-strength fibers in the cylindrical article is at an angle of 0 to 135° with regard to the main extension direction of the cylindrical article.

12. Process according to any one of claims 1-11, wherein the cylindrical mandrel is an inflatable and heatable mandrel.

13. Process according to any one of claims 1-12, wherein in step b) the cylindrical hollow article around the mandrel is subjected to a heat and/or pressure by compressing the cylindrical hollow article around the mandrel by means of a surrounding mould.

14. Process according to any one of claims 1-13, wherein in step b) the cylindrical hollow article around the mandrel is subjected to a heat and/or pressure, by means of a vacuum oven.

15. Process according to any one of claims 1-14, wherein in step b) the cylindrical hollow article around the mandrel is subjected to a temperature of at most 150 °C and/or to a pressure of at most 250 bar.

**Patentansprüche**

1. Verfahren zum Herstellen einer einfach gekrümmten Platte, umfassend:

a) Winden von mindestens einem Bogen aus hochfesten Fasern um einen zylinderförmigen Dorn, um einen zylinderförmigen hohlen Körper um den Dorn herum zu schaffen,
b) Unterziehen des zylinderförmigen hohlen Körpers um den Dorn einer Hitze- und/oder Druckbehandlung, um einen gefestigten zylinderförmigen hohlen Körper bereitzustellen, und
c) Schneiden des gefestigten zylinderförmigen hohlen Körpers in mindestens eine einfach gekrümmte Platte,

wobei der mindestens eine Bogen aus hochfesten Fasern mindestens zwei Lagen von unidirektional orientierten hochfesten Fasern umfasst, und wobei die Haupterstreckungsrichtungen der unidirektional orientierten hochfesten Fasern in angrenzenden Lagen nicht unidirektional ist.

2. Verfahren nach Anspruch 1, wobei die unidirektional orientierten hochfesten Fasern Bänder aus Polyethylen mit ultrahohem Molekulargewicht (UHMWPE) umfassen.

3. Verfahren nach Anspruch 2, wobei die UHMWPE-Bänder eine Zugfestigkeit von mehr als 1,5 GPa gemäß ASTM D882-00 und ein Modul von mehr als 100 GPa gemäß ASTM D822-00 und einen uniplanaren 200/110 Orientierungsparameter von mindestens 3 aufweisen, und vorzugsweise die uniplanare 200/110 Orientierung der Bänder parallel zur Haupterstreckungsrichtung der Bänder verläuft.

4. Verfahren nach Anspruch 2 oder Anspruch 3, wobei die UHMWPE-Bänder aus einem UHMWPE erhalten werden, das ein unmittelbar nach Schmelzen bei 160 °C bestimmtes elastisches Schermodul $G_N^0$ von höchstens 1,4 MPa, besonders von höchstens 1,0 MPa, konkreter von höchstens 0,9 MPa und noch konkreter von höchstens 0,8 MPa und insbesondere sogar von höchstens 0,7 MPa aufweist.

5. Verfahren nach einem der Ansprüche 1-4, wobei die UHMWPE-Bänder eine Breite von mindestens 2 mm und eine Dicke von höchstens 0,5 mm aufweisen.

6. Verfahren nach einem der Ansprüche 1-5, wobei der mindestens eine Bogen aus hochfesten Fasern einen Thermoplasten und/oder ein thermoplastisches Elastomer umfasst, insbesondere von 0,5 bis 40 Gewichts-% eines Thermoplasten und/oder eines thermoplastischen Elastomers auf der Grundlage des Gesamtgewichts des Bogens.

7. Verfahren nach Anspruch 6, wobei der Thermoplast und/oder das thermoplastische Elastomer zwischen den mindestens zwei Lagen von unidirektional orientierten hochfesten Fasern vorhanden ist, vorzugsweise auch auf mindestens einer der Oberflächen des Bogens.

8. Verfahren nach einem der Ansprüche 1-7, wobei die Haupterstreckungsrichtungen der unidirektional orientierten hochfesten Fasern in angrenzenden Lagen einen Winkel von 20° bis 160°, besonders 45° bis 135°, konkreter von 60° bis 120°, noch konkreter von 80° bis 110° und ganz besonders von im Wesentlichen 90° definieren.

9. Verfahren nach einem der Ansprüche 1-8, wobei der Bogen aus hochfesten Fasern 2 Lagen von unidirektional orientierten hochfesten Fasern in einer Anordnung 0-90 aufweist.

10. Verfahren nach einem der Ansprüche 1-8, wobei der Bogen aus hochfesten Fasern 4 Lagen von unidirektional orientierten hochfesten Fasern in einer Anordnung 0-0-90-90 aufweist.

11. Verfahren nach einem der Ansprüche 1-10, wobei die Bögen so um den zylinderförmigen Dorn gewunden werden, dass die Haupterstreckungsrichtung von mindestens der Hälfte der hochfesten Fasern in dem zylinderförmigen Körper in einem Winkel von 0 bis 135° in Bezug auf die Haupterstreckungsrichtung des zylinderförmigen Körpers verläuft.

12. Verfahren nach einem der Ansprüche 1-11, wobei der zylinderförmige Dorn ein aufblasbarer und beheizbarer Dorn ist.

13. Verfahren nach einem der Ansprüche 1-12, wobei in Schritt b) der zylinderförmige hohle Körper um den Dorn einer Hitze und/oder einem Druck durch Komprimieren des zylinderförmigen hohlen Körpers um den Dorn mittels einer umschließenden Form unterzogen wird.

14. Verfahren nach einem der Ansprüche 1-13, wobei in Schritt b) der zylinderförmige hohle Körper um den Dorn einer Hitze und/oder Druck mittels eines Vakuumofens unterzogen wird.

15. Verfahren nach einem der Ansprüche 1-14, wobei in Schritt b) der zylinderförmige hohle Körper um den Dorn einer Temperatur von höchstens 150 °C und/oder einem Druck von höchstens 250 bar unterzogen wird.

**Revendications**

1. Procédé de fabrication d'un panneau à courbure unique, comprenant :

   a) l'enroulement d'au moins une feuille de fibres de résistance élevée autour d'un mandrin cylindrique pour créer un article cylindrique creux autour du mandrin,
   b) la soumission de l'article cylindrique creux autour du mandrin à de la chaleur et/ou à une pression pour fournir un article cylindrique creux consolidé, et
   c) la découpe de l'article cylindrique creux consolidé en au moins un panneau à courbure unique,

   dans lequel la au moins une feuille de fibres de résistance élevée comprend au moins deux couches de fibres de résistance élevée à orientation unidirectionnelle et dans lequel les directions d'extension principales des fibres de résistance élevée à orientation unidirectionnelle dans des couches adjacentes n'est pas unidirectionnelle.

2. Procédé selon la revendication 1, dans lequel les fibres de résistance élevée à orientation unidirectionnelle comprennent des rubans de polyéthylène de poids moléculaire ultra-élevé (UHMWPE).

3. Procédé selon la revendication 2, dans lequel les rubans d'UHMWPE ont une résistance à la traction de plus de 1,5 GPa selon la norme ASTM D882-00 et un module de plus de 100 GPa selon la norme ASTM D822-00 et un paramètre d'orientation uniplanaire 200/110 d'au moins 3, de préférence l'orientation uniplanaire 200/110 des rubans est parallèle à la direction d'extension principale des rubans.

4. Procédé selon la revendication 2 ou la revendication 3, dans lequel les rubans d'UHMWPE sont obtenus à partir d'un UHMWPE ayant un module de cisaillement élastique $G_N^0$ déterminé directement après fusion à 160 °C au maximum de 1,4 MPa, en particulier au maximum de 1,0 MPa, plus particulièrement au maximum de 0,9 MPa, mais encore plus particulièrement au maximum de 0,8 MPa et bien plus particulièrement encore au maximum de 0,7 MPa.

5. Procédé selon l'une quelconque des revendications 1 à 4, dans lequel les rubans d'UHMWPE ont une largeur d'au moins 2 mm et une épaisseur au maximum de 0,5 mm.

6. Procédé selon l'une quelconque des revendications 1 à 5, dans lequel la au moins une feuille de fibres de résistance élevée comprend un thermoplastique et/ou un élastomère thermoplastique qui comprend ou comprennent en particulier 0,5 à 40 % en poids d'un thermoplastique et/ou d'un élastomère thermoplastique sur la base du poids total de la feuille.

7. Procédé selon la revendication 6, dans lequel le thermoplastique et/ou l'élastomère thermoplastique est ou sont présents entre les au moins deux couches de fibres de résistance élevée à orientation unidirectionnelle, de préférence également sur au moins l'une des surfaces de la feuille.

8. Procédé selon l'une quelconque des revendications 1 à 7, dans lequel les directions d'extension principales des fibres de résistance élevée à orientation unidirectionnelle de couches adjacentes définissent un angle de 20° à 160°, en particulier de 45° à 135°, plus particulièrement de 60° à 120°, encore plus particulièrement de 80° à 110° et bien plus particulièrement de sensiblement 90°.

**9.** Procédé selon l'une quelconque des revendications 1 à 8, dans lequel la feuille de fibres de résistance élevée a 2 couches de fibres de résistance élevée à orientation unidirectionnelle dans un agencement de 0-90.

**10.** Procédé selon l'une quelconque des revendications 1 à 8, dans lequel la feuille de fibres de résistance élevée a 4 couches de fibres de résistance élevée à orientation unidirectionnelle dans un agencement de 0-0-90-90.

**11.** Procédé selon l'une quelconque des revendications 1 à 10, dans lequel les feuilles sont enroulées autour du mandrin cylindrique de manière que la direction d'extension principale d'au moins la moitié des fibres de résistance élevée de l'article cylindrique se situe sous un angle de 0 à 135° par rapport à la direction d'extension principale de l'article cylindrique.

**12.** Procédé selon l'une quelconque des revendications 1 à 11, dans lequel le mandrin cylindrique est un mandrin gonflable et chauffable.

**13.** Procédé selon l'une quelconque des revendications 1 à 12, dans lequel, à l'étape b), l'article cylindrique creux autour du mandrin est soumis à de la chaleur et/ou à une pression en comprimant l'article cylindrique creux autour du mandrin au moyen d'un moule qui l'entoure.

**14.** Procédé selon l'une quelconque des revendications 1 à 13, dans lequel, à l'étape b), l'article cylindrique creux autour du mandrin est soumis à de la chaleur et/ou à une pression au moyen d'un four à vide.

**15.** Procédé selon l'une quelconque des revendications 1 à 14, dans lequel, à l'étape b), l'article cylindrique creux autour du mandrin est soumis à une température au maximum de 150 °C et/ou à une pression au maximum de 250 bars.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 833742 A
- WO 2006107197 A
- EP 1627719 A
- EP 2252853 A
- US 3713753 A
- DE 2460808
- DE 3415466
- WO 0121668 A
- US 20060142521 A
- EP 2307180 A
- WO 2008040506 A
- WO 2008040511 A

**Non-patent literature cited in the description**

- **TALEBI et al.** *Macromolecules,* 2010, vol. 43, 2780-2788
- **RASTOGI, S. ; LIPPITS, D. ; PETERS, G. ; GRAF, R. ; YEFENG, Y. ; SPIESS, H. ; 1ST AUGUST 2005.** Heterogeneity in Polymer Melts from Melting of Polymer Crystals. *Nature Materials,* vol. 4 (8), 635-641
- Controlling the melting kinetics of polymers; a route to a new melt state. PhD thesis Lippits, D.R. Eindhoven University of Technology, 06 March 2007